# EUROPEAN PATENT APPLICATION

(11) **EP 4 206 913 A1**
(43) Date of publication of application: **05.07.2023**
(21) Application number: 21871534.0
(22) Date of filing: 23.09.2021
(51) Int. Cl.: G06F 9/451

(54) **FUNCTION EXECUTION METHOD AND APPARATUS**

(30) Priority: 24.09.2020 CN 202011016477
(71) Applicant: Vivo Mobile Communication Co., Ltd., Dongguan, Guangdong 523863 (CN)
(72) Inventor: HUANG, Li, Dongguan, Guangdong 523863 (CN)
(74) Representative: Murgitroyd & Company
(86) International application number: PCT/CN2021/119852
(87) International publication number: WO 2022/063165

(57) **Abstract**

This application discloses a function execution method and apparatus, which belong to the field of communication technology. The method includes: receiving a first input by a user in a case that at least one first identifier is displayed in a system status bar on a screen, where the at least one first identifier includes at least one of the following: an identifier of an unread message, an identifier of prompt information, or an identifier of a system function, the prompt information is used for prompting the user of an application running in a background, and the first input is an input by the user on a target identifier in the at least one first identifier; and in response to the first input, in a case that an input parameter of the first input matches a first preset input parameter, performing a target operation corresponding to both the target identifier and the first preset input parameter.

## Description

### CROSS-REFERENCE TO RELATED APPLICATIONS

This application claims priority to Chinese Patent Application No. 202011016477.0 filed in China on September 24, 2020, the entire content of which is hereby incorporated herein by reference.

### TECHNICAL FIELD

This application belongs to the field of communication technologies, and specifically, to a function execution method and apparatus.

### BACKGROUND

Usually, when an electronic device receives a new message (such as system prompt information, application prompt information, session information, or the like), the electronic device may display a notification identifier of the message in a system status bar, and a user may perform a sliding input on the system status bar, to trigger the electronic device to display a notification center page, so that the user may perform an input on an identifier corresponding to a message that needs to be viewed, so as to trigger the electronic device to display a page corresponding to the message, and view specific content of the message.

However, in the method, when the user needs to view the message, the user needs to perform the input a plurality of times to view the corresponding message. A user operation is cumbersome and time-consuming, resulting in relatively low efficiency of displaying the message on the electronic device.

### SUMMARY

An objective of embodiments of this application is to provide a function execution method and apparatus, which may resolve a problem of relatively low efficiency of displaying a message by an electronic device.

To resolve the foregoing technical problems, this application is implemented as follows:
According to a first aspect, an embodiment of this application provides a function execution method, including: receiving a first input by a user in a case that at least one first identifier is displayed in a system status bar on a screen, where the at least one first identifier includes at least one of the following: an identifier of an unread message, an identifier of prompt information, or an identifier of a system function, the prompt information is used for prompting the user of an application running in a background, and the first input is an input by the user on a target identifier in the at least one first identifier; and in response to the first input, in a case that an input parameter of the first input matches a first preset input parameter, performing a target operation corresponding to both the target identifier and the first preset input parameter.

According to a second aspect, an embodiment of this application provides a function execution apparatus, including: a receiving module and an execution module. The receiving module is configured to receive a first input by a user in a case that at least one first identifier is displayed in a system status bar on a screen, where the at least one first identifier includes at least one of the following: an identifier of an unread message, an identifier of prompt information, or an identifier of a system function, the prompt information is used for prompting the user of an application running in a background, and the first input is an input by the user on a target identifier in the at least one first identifier. The execution module is configured to perform, in response to the first input received by the receiving module, in a case that an input parameter of the first input matches a first preset input parameter, a target operation corresponding to both the target identifier and the first preset input parameter.

According to a third aspect, an electronic device is provided in an embodiment of this application, including a processor, a memory, and a program or an instruction stored in the memory and executable on the processor, where the program or the instruction, when executed by the processor, implements the steps of the method according to the first aspect.

According to a fourth aspect, a readable storage medium is provided in an embodiment of this application, storing a program or an instruction, where the program or the instruction, when executed by a processor, implements the steps of the method according to the first aspect.

According to a fifth aspect, a chip is provided in an embodiment of this application, including a processor and a communication interface, where the communication interface is coupled to the processor, and the processor is configured to run a program or an instruction to implement the method according to the first aspect.

In this embodiment of this application, when at least one first identifier in the system status bar on the screen is displayed on the electronic device, the user may perform a first input on the target identifier in the at least one first identifier, so that the electronic device may perform, when an input parameter of the first input matches a first preset input parameter, a target operation corresponding to both the target identifier and the first preset input parameter. Because in a case that there are a plurality of identifiers displayed in the system status bar on the screen of the electronic device, the user may directly perform an input on a specific identifier displayed in the system status bar, so as to trigger the electronic device to determine a matching condition between the input parameter inputted by the user for the specific identifier and the preset input parameter, and determine a to-be-performed operation. There is no need for the user to perform a pull-down input on the system status bar to display the notification management page, and then perform an input on a notification message corresponding to the specific identifier. Therefore, a user operation may be simplified and a time may be reduced, and the efficiency of displaying the message by the electronic device may be improved.

### BRIEF DESCRIPTION OF THE DRAWINGS

FIG. 1 is a schematic diagram 1 of a function execution method according to an embodiment of this application.
FIG. 2 is a schematic diagram 1 of an example of an interface of a mobile phone according to an embodiment of this application.
FIG. 3 is a schematic diagram 2 of a function execution method according to an embodiment of this application.
FIG. 4 is a schematic diagram 2 of an example of an interface of a mobile phone according to an embodiment of this application.
FIG. 5 is a schematic diagram 3 of an example of an interface of a mobile phone according to an embodiment of this application.
FIG. 6 is a schematic diagram 4 of an example of an interface of a mobile phone according to an embodiment of this application.
FIG. 7 is a schematic diagram 3 of a function execution method according to an embodiment of this application.
FIG. 8 is a schematic structural diagram 1 of a function execution apparatus according to an embodiment of this application.
FIG. 9 is a schematic structural diagram 2 of a function execution apparatus according to an embodiment of this application.
FIG. 10 is a schematic diagram 1 of a hardware structure of an electronic device according to an embodiment of this application.
FIG. 11 is a schematic diagram 2 of a hardware structure of an electronic device according to an embodiment of this application.

### DETAILED DESCRIPTION

The technical solutions in embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

The specification and claims of this application, and terms "first" and "second" are used to distinguish similar objects, but are unnecessarily used to describe a specific sequence or order. It may be understood that the data used in such a way is interchangeable in proper circumstances, so that the embodiments of this application can be implemented in other sequences than the sequence illustrated or described herein. In addition, objects distinguished by "first" and "second" are usually of a type, and the number of objects is not limited. For example, a first object may be one or more than one. In addition, in the specification and claims, "and/or" means at least one of the connected objects, and the character "/" generally indicates an "or" relationship between associated objects.

A function execution method provided in the embodiments of this application is described in detail below by using specific embodiments and application scenarios with reference to the accompanying drawings.

In this embodiment of this application, an electronic device may display a system status bar in a top area on a screen (that is, an area close to an upper edge of the electronic device), and display a plurality of identifiers in the system status bar, for example: a time identifier, a battery power identifier, a signal strength identifier, an unread message identifier, or the like. When the user requires the electronic device to display a page corresponding to a specific identifier (such as the identifier of the unread message), the user may directly perform a click input on the identifier of the unread message displayed in the system status bar, so as to trigger the electronic device to display a message viewing page corresponding to the identifier of the unread message according to the click input by the user; or the user may perform a long-press input on the identifier of the unread message displayed in the system status bar, so as to trigger the electronic device to display a preview window corresponding to the identifier of the unread message in the form of a pop-up window according to the long-press input by the user. In the embodiments of this application, various identifiers are displayed through the system status bar, to associate each page in the electronic device with the identifiers in the system status bar, so that the electronic device is more efficient in terms of information display and user operation, thereby improving a use experience of the user, and improving efficiency of displaying a message by the electronic device.

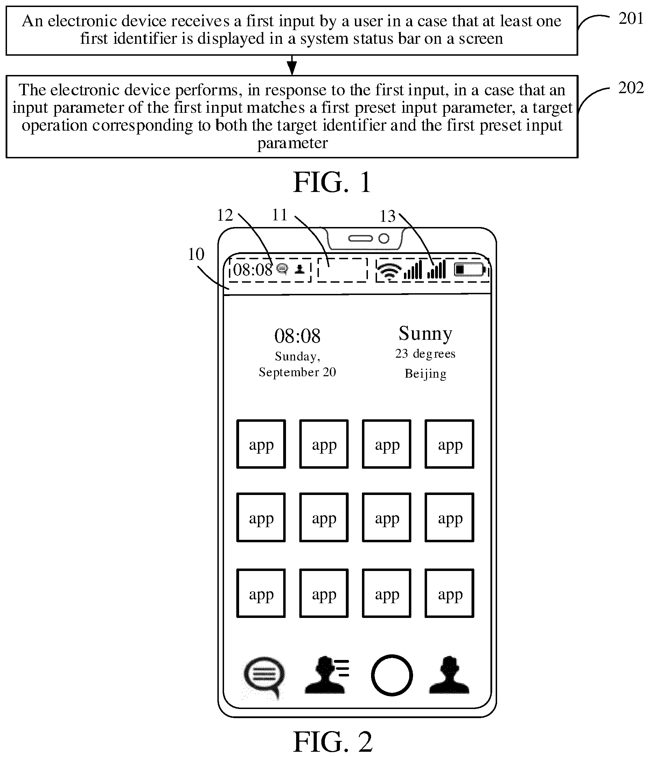

The embodiments of this application provide a function execution method. FIG. 1 is a flowchart of a function execution method according to an embodiment of this application. The method may be applied to an electronic device. As shown in FIG. 1, the function execution method provided in the embodiments of this application may include the following step 201 and step 202.

Step 201. An electronic device receives a first input by a user in a case that at least one first identifier is displayed in a system status bar on a screen.

In this embodiment of this application, the at least one first identifier includes at least one of the following: an identifier of an unread message, an identifier of prompt information, or an identifier of a system function, the prompt information is used for prompting the user of an application running in a background, and the first input is an input by the user on a target identifier in the at least one first identifier.

In this embodiment of this application, when the at least one first identifier in the system status bar on the screen is displayed on the electronic device, if the user requires the electronic device to process the target identifier in the at least one first identifier, to perform a corresponding target operation, the user may perform a first input on the target identifier, so as to trigger the electronic device to obtain an input parameter of the first input, and perform the target operation when the input parameter matches a first preset input parameter.

Optionally, in this embodiment of this application, the system status bar is displayed in an area of the upper edge on the screen, and is configured to display various identifiers to prompt the user.

Optionally, in this embodiment of this application, the identifier of the system function may include at least one of the following: a system time identifier, a battery power identifier of a device, a signal strength identifier of a device, a wireless fidelity (Wireless Fidelity, Wi-Fi) signal strength identifier, an alarm clock identifier, Bluetooth identifier, or the like.

Optionally, in this embodiment of this application, each identifier in the at least one first identifier is associated with at least one page respectively, so that the user may directly perform an input on the identifier displayed in the system status bar, to trigger the electronic device to display a corresponding associated page.

It should be noted that that each identifier is associated with at least one page respectively may be understood as: each identifier is associated with a function or an application corresponding to each page in the at least one page.

For example, the identifier of the system time may be associated with a time setting page or a schedule management application (or a calendar application), so that the user may perform an input on the system time identifier, to trigger the electronic device to display the time setting page or a page of the schedule management application according to an input parameter of the user.

Optionally, in this embodiment of this application, a display format of the system time identifier may be any one of the following: a 24-hour clock and a 12-hour clock (displaying prompt information of "morning" or "afternoon"). The user may actively set the system time or the electronic device may set the system time through a network time (that is, Beijing time).

Optionally, in this embodiment of this application, the identifier of the unread message and the identifier of the prompt information are associated with the message notification page. An order in which the identifier of the unread message and the identifier of the prompt information are displayed in the system status bar is synchronized with an order in which the unread message and the prompt information are displayed on the message notification page.

Optionally, in this embodiment of this application, the identifier of the system function is associated with the control page, and an order in which the identifier of the system function is displayed in the system status bar is synchronized with an order in which a control control (that is, a target control described below) is displayed on the control page.

For example, a description is made by using an example in which the electronic device is a mobile phone. As shown in FIG. 2, when displaying any page (such as a desktop), a mobile phone may display the system status bar 10 in the area corresponding to the upper edge on the screen. A plurality of identifiers are displayed in the system status bar 10, where the identifier of the unread message and the identifier of the prompt information are displayed in a left area 12 of a blank area 11, and the identifier of the system function is displayed in a right area 13 of the blank area 11. The user may perform an input on any identifier in the system status bar 10, to trigger the mobile phone to perform a corresponding operation.

Optionally, in this embodiment of this application, before the step 201, the function execution method provided in the embodiments of this application may further include the following step 301 or step 302.

Step 301. The electronic device receives a first message, and displays a third identifier in a system status bar.

In this embodiment of this application, the third identifier is used for indicating that the electronic device receives the first message, and the third identifier is an identifier in the at least one first identifier.

Optionally, in this embodiment of this application, the first message may be a message sent by another electronic device or a server.

Optionally, in this embodiment of this application, the electronic device may display a third identifier in a preset display form, so as to prompt the user of the importance of a first message corresponding to the third identifier.

Optionally, in this embodiment of this application, the preset display form may be any one of the following: a chart display form, a quantity display form, a static reminding form, a dynamic reminding form, a floating window display form, or the like.

It should be noted that for how to display other identifiers in the at least one first identifier, reference may be made to the description of the first identifier, which is not repeated.

Step 302. In a case of running a first application in a background, the electronic device displays a fourth identifier in the system status bar.

In this embodiment of this application, the fourth identifier is used for prompting the first application running in the background, and the fourth identifier is an identifier in the at least one first identifier.

Optionally, in this embodiment of this application, the first application is an application in a preset application. When determining that the application running in the background is an application in the preset application, the electronic device may display a corresponding identifier in the system status bar.

In this embodiment of this application, when the electronic device receives the first message, the electronic device may display a third identifier used for indicating the first message in the system status bar to prompt the user; or when the electronic device runs the first application in the background, the electronic device may display a fourth identifier used for indicating the first application in the system status bar, so that when the electronic device receives a new message or the application running in the background, the electronic device may display the corresponding identifier in the system status bar in time, which improves the flexibility of displaying the identifier by the electronic device.

Step 202. The electronic device performs, in response to the first input, in a case that an input parameter of the first input matches a first preset input parameter, a target operation corresponding to both the target identifier and the first preset input parameter.

Optionally, in this embodiment of this application, the first preset input parameter may be any one of the following: a click input, a long-press input, a drag input, or the like. Different input parameters correspond to different target operations.

It should be noted that a target operation corresponding to both the target identifier and the first preset input parameter may be understood as: the target operation is an operation in at least one operation corresponding to the target identifier, and the target operation is an operation in at least one operation corresponding to the first preset input parameter.

Optionally, in this embodiment of this application, the electronic device may display a page in an application corresponding to the target identifier, or the electronic device may display a preset window, so as to display content corresponding to the target identifier in the preset window.

Optionally, in this embodiment of this application, the electronic device may enlarge and display the target identifier according to the first input parameter of the first input.

Optionally, in this embodiment of this application, if the first input is the drag input by the user on the target identifier, the electronic device may display a preset area, so that the user may drag the target identifier into the preset area to trigger the electronic device to delete the target identifier from the system status bar. In addition, the user may select to disable a message notification function of the application corresponding to the target identifier (that is, when a new message is received through the application, a notification identifier is not displayed in the system status bar).

The embodiments of this application provide a function execution method. When at least one first identifier in the system status bar on the screen is displayed on the electronic device, the user may perform a first input on the target identifier in the at least one first identifier, so that the electronic device may perform, when an input parameter of the first input matches a first preset input parameter, a target operation corresponding to both the target identifier and the first preset input parameter. Because in a case that there are a plurality of identifiers displayed in the system status bar on the screen of the electronic device, the user may directly input a specific identifier displayed in the system status bar, so as to trigger the electronic device to determine whether the input parameter inputted by the user for the specific identifier matches the preset input parameter, and determine a to-be-performed operation. There is no need for the user to perform a pull-down input on the system status bar to display the notification management page, and then perform an input on a notification message corresponding to the specific identifier. Therefore, a user operation may be simplified and a time may be reduced, and the efficiency of displaying the message by the electronic device may be improved.

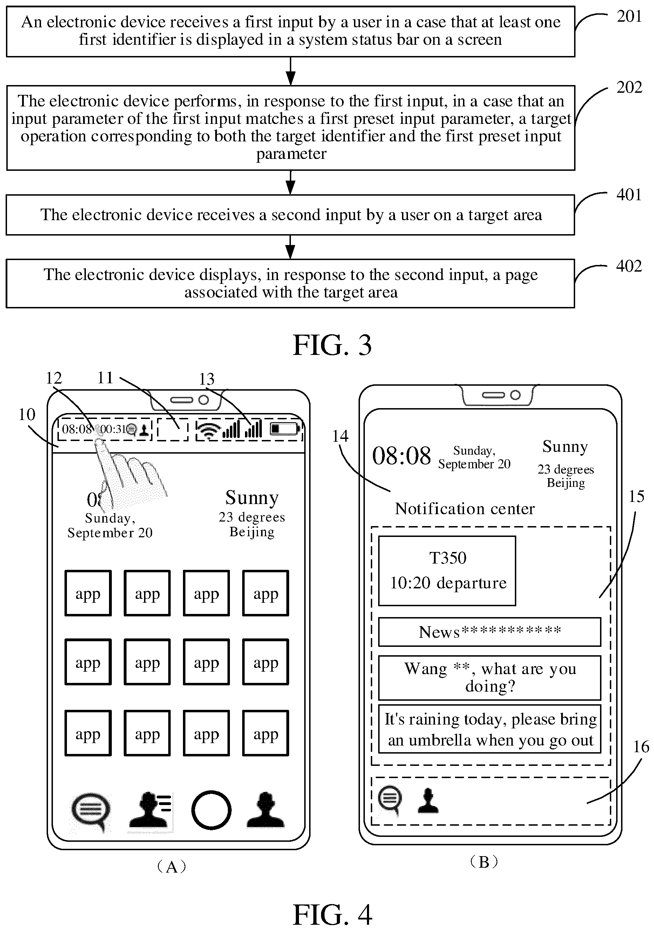

Optionally, in this embodiment of this application, the system status bar includes a first area and a second area, the first area is associated with a message notification page, and the message notification page is configured to display preview information of the unread message and preview information of the prompt information; and the second area is associated with a control page, the control page is configured to display at least one target control, and each target control is configured to enable or disable a function. With reference to FIG. 1, as shown in FIG. 3, after the step 202, the function execution method provided in the embodiments of this application may further include the following step 401 or step 402.

Step 401. The electronic device receives a second input by a user on a target area.

In this embodiment of this application, the target area is a first area or a second area.

Optionally, in this embodiment of this application, the first area may be a left half area in the system status bar, and the second area may be a right half area in the system status bar. The electronic device may display the identifier of the unread message and the identifier of the prompt information in the first area, and display the identifier of the system function in the second area.

Optionally, in this embodiment of this application, the user may perform an input (for example, a downward sliding input) on the first area, so that the electronic device displays a message notification page associated with the first area; or the user may perform an input on the second area, so that the electronic device displays a control page associated with the second area.

Optionally, in this embodiment of this application, the at least one target control may include at least one of the following: a Wi-Fi control, a mobile data control, a Bluetooth control, a flight mode control, a flashlight control, a near field communication technology (Near Field Communication, NFC) control, a positioning control, or the like.

Step 402. The electronic device displays, in response to the second input, a page associated with the target area.

Optionally, in this embodiment of this application, the at least one first identifier includes the identifier of the unread message and the identifier of the prompt information, and the target area is the first area; and the message notification page includes a preview message display area and a first compensation display area, the preview message display area is used for displaying the preview information of the unread message and the preview information of the prompt information, the first compensation display area is used for displaying at least one second identifier, and the at least one second identifier is an identifier of a message whose preview information is not displayed in the preview message display area.

Optionally, in this embodiment of this application, the user may classify applications in the electronic device in advance, to determine an application corresponding to an important notification and an application corresponding to an ordinary notification, so that the importance of each application (or each page) may be set, so as to give priority to displaying an identifier corresponding to a more important notification.

Optionally, in this embodiment of this application, the electronic device may determine the importance of the message (the unread message or the prompt information) corresponding to the identifier according to at least one of the following: a category of an application corresponding to a message, a quantity of use times of an application corresponding to a message, a use frequency of an application corresponding to a message, or the like.

Optionally, in this embodiment of this application, the electronic device may display an identifier corresponding to an important notification at a front position in the first area, and display an identifier corresponding to an ordinary notification at a rear position in the first area. In addition, when displaying the identifier corresponding to the important notification and the identifier corresponding to the ordinary notification, the electronic device sequentially displays each identifier in a chronological order; or the electronic device may only display each identifier once in the first area in a chronological order without determining the importance of the message corresponding to each identifier.

It should be noted that the electronic device may flexibly divide the first area into two sub-areas according to a quantity of identifiers corresponding to important notifications and a quantity of identifiers corresponding to ordinary notifications, so as to display an identifier corresponding to an important notification and an identifier corresponding to an ordinary notification, and in each sub-area, display an identifier corresponding to each important notification and an identifier corresponding to an ordinary notification in a chronological order. It may be understood that when there is no identifier corresponding to the important notification, the first area does not need to be divided into two sub-areas, and the identifier corresponding to the ordinary notification may be displayed in the entire first area (alternatively, when there is no identifier corresponding to the ordinary notification, the first area does not need to be divided into two sub-areas, and the identifier corresponding to the important notification may be displayed in the entire first area).

For example, with reference to FIG. 2, as shown in (A) in FIG. 4, identifiers of a plurality of unread messages and identifiers of prompt information displayed in the left area 12 of the system status bar 10 may be arranged and displayed in an order from left to right according to the importance of messages corresponding to the identifiers, and a leftmost identifier close to a time identifier is an identifier corresponding to the important notification. As shown in (B) in FIG. 4, the user may perform a pull-down input on the left area 12, to trigger the electronic device to display the message notification page 14, and display preview information of the unread message and preview information of the prompt information in the preview message display area 15 on the message notification page 14, and display in a first compensation display area 16 of the message notification page 14 an identifier of a message whose preview information is not displayed in the preview message display area.

Optionally, in this embodiment of this application, the at least one first identifier includes the identifier of the unread message, the identifier of the prompt information, and the identifier of the system function, and the target area is the second area; and the control page includes a control display area and a second compensation display area, the control display area is used for displaying the at least one target control, and the second compensation display area is used for displaying the identifier of the unread message and the identifier of the prompt information.

Optionally, in this embodiment of this application, the identifier of the system function may include at least one of the following: a battery power identifier (such as a battery power remaining identifier, and a charging identifier), a signal strength (such as a subscriber identity module (Subscriber Identity Module, SIM) card signal strength, and a Wi-Fi signal strength) identifier, a network speed identifier, a virtual private network (Virtual Private Network, VPN) identifier, a Do Not Disturb mode identifier, a mute identifier, a vibration identifier, a positioning identifier, a Bluetooth identifier, an alarm clock identifier, or the like.

Optionally, in this embodiment of this application, for the identifier of the system function, when the electronic device displays an identifier of each system function in the second area of the system status bar, the electronic device may sort according to a method of cluster display. After presetting a priority category, the electronic device classifies and displays the identifiers; and the user may automatically set an identifier category, and add a new identifier to the identifier category for sorting and modification; or the user may cancel displaying according to a method of cluster display by setting to trigger the electronic device, and only sort according to a default order of the identifier; or the electronic devices may sort according to a start-up time sequence of a function corresponding to an identifier (that is, an identifier of a newly effective function is displayed on a left side of an identifier of a historically effective function).

For example, a method of cluster display may include at least one of the following: display priorities of identifiers with a scene association relationship are equal (for example, a priority of the network speed identifier, a priority of the VPN identifier, and a priority of the Wi-Fi identifier are equal), a display priority of an identifier of fixed display (that is, long-time display) is higher than a display priority of an identifier of frequent display or cancellation (that is, short-time display) (for example: the time identifier, the battery power identifier, or the like), or a display priority of an identifier of an important function is higher than a display priority of an identifier of an ordinary function (for example, a system audio function affects a sound output of a device, and therefore, a display priority of the system audio function identifier is higher than a display priority of another system status identifier), or a display priority of an identifier of a function without obvious state awareness is higher than a display priority of a function identifier with obvious state awareness (for example, the Bluetooth identifier is an identifier without physical entity perception, and a display priority is higher than a display priority of a wired headset identifier).

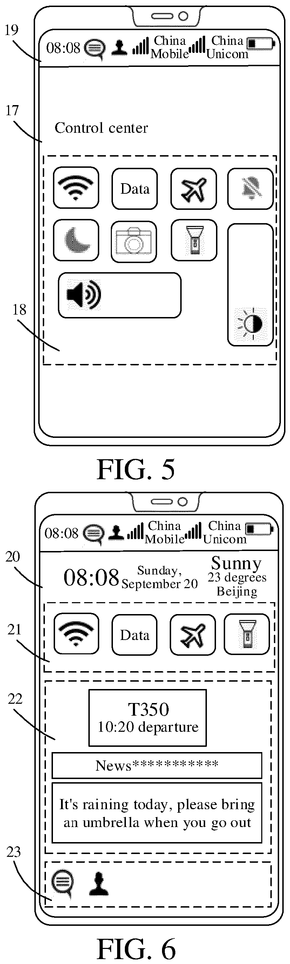

For example, with reference to FIG. 2, as shown in FIG. 5, the user may perform a pull-down input on the right area 13, to trigger the electronic device to display the control page 17, display at least one target control in a control display area 18 of the control page 17, and display the identifier of the unread message and the identifier of the prompt information in a second compensation display area 19 of the control page 17.

Optionally, in this embodiment of this application, the user may select to display the preview information of the unread message, the preview information of the prompt information, at least one second identifier, and at least one target control on a same page through setting, that is, a page on which the message notification page and the control page are combined, so that the combined page may be displayed no matter whether the user performs an input on the first area or the second area.

Optionally, in this embodiment of this application, when the system status bar includes many identifiers of the unread messages, identifiers of the prompt information, and identifiers of the system functions, the electronic device cannot display all of these identifiers in the system status bar. Therefore, the user may perform a sliding input in a left direction or a right direction on the first area or the second area, to trigger the electronic device to switch the identifier displayed in the system status bar, so that the user may view more identifiers of the identifiers of unread messages, identifiers of the prompt information, and identifiers of the system functions.

For example, with reference to FIG. 2, as shown in FIG. 6, when the user determines the system status bar 10 of the mobile phone as a complete area (that is, does not distinguish between the first area and the second area) through settings, after the user performs a pull-down input on the system status bar 10, the electronic device may display a combination interface 20, so as to display at least one target control in a control display area 21 of the combination interface 20, display the preview information of the unread message and the preview information of the prompt information in a preview message display area 22 on the combination interface 20, and display in a third compensation display area 23 of the combination interface 20 an identifier of a message whose preview information is not displayed in the preview message display area.

In this embodiment of this application, a system status bar of the electronic device may include a first area and a second area, and the first area may be associated with a message notification page, to display preview information of an unread message and preview information of prompt information; the second area may be associated with a control page, to display at least one target control; and the user may perform a second input on the first area or the second area, to trigger the electronic device to display a message notification page or a control page. Therefore, the user may flexibly perform a selection input on a plurality of areas in the system status bar, so that the electronic device displays a corresponding page, thereby improving the flexibility of displaying a page by the electronic device.

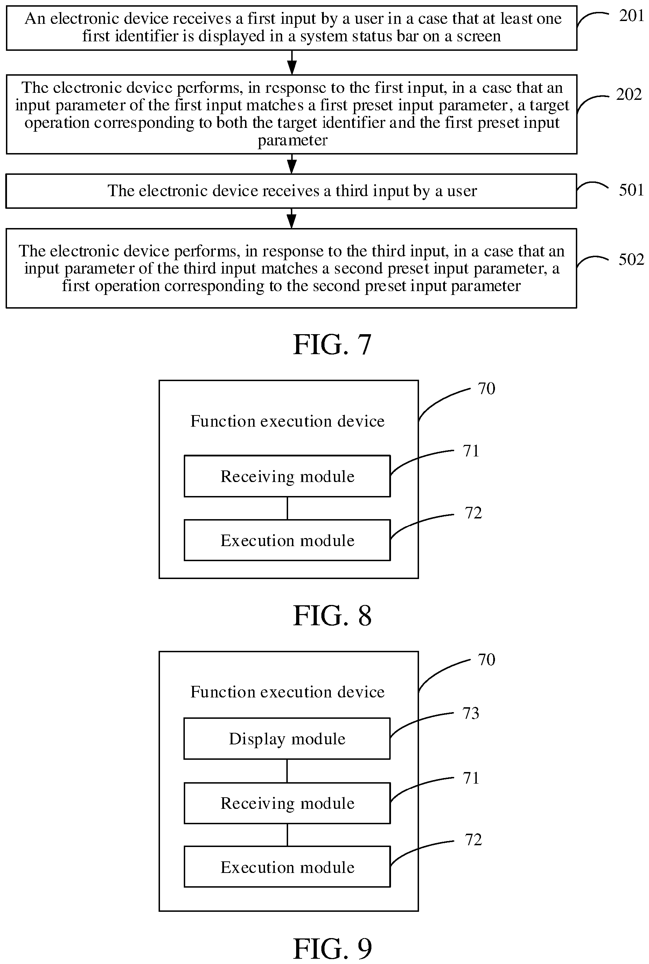

Optionally, in this embodiment of this application, with reference to FIG. 1, as shown in FIG. 7, after the step 202, the function execution method provided in the embodiments of this application may further include the following step 501 or step 502.

Step 501. The electronic device receives a third input by a user.

In this embodiment of this application, the third input is an input by the user on a blank area in the system status bar, and the blank area is an area in which no identifier is displayed in the system status bar.

Optionally, in this embodiment of this application, background of the system status bar may be associated with a navigation gesture, so that by performing an input on the background of the system status bar (that is, a blank area in the system status bar), page switching of the electronic device (for example, returning to a previous page, returning to a desktop, or the like) may be controlled.

It should be noted that when the electronic device displays any page, the user may perform an input on the blank area in the system status bar, to control an operation related to the displayed page.

Optionally, in this embodiment of this application, the background of the system status bar may be any one of the following: default background of the system, background of a currently displayed page, or background preset by the user; and the user may customize a background color or a pattern style of the system status bar according to a use requirement. It may be understood that the background of the system status bar may be different from desktop background or the background of the currently displayed page; and the background of the first area and the background of the second area in the system status bar may be set independently.

Optionally, in this embodiment of this application, a color of the identifier displayed in the system status bar (that is, the identifier of the unread message, the identifier of the prompt information, and the identifier of the system function) may be a color preset by the user, or a difference between a color value of the identifier displayed in the system status bar and a background color value of the system status bar may be greater than or equal to a preset color difference (that is, a color of the identifier is quite different from a background color of the system status bar. For example, the identifier is white, and the background of the system status bar is black).

Step 502. The electronic device performs, in response to the third input, in a case that an input parameter of the third input matches a second preset input parameter, a first operation corresponding to the second preset input parameter.

In this embodiment of this application, the first operation is any one of the following: refreshing a target page, displaying a previous page of the target page, displaying a background task management page, or displaying a desktop; and different second preset input parameters correspond to different operations, and the target page is a page currently displayed by an electronic device.

Optionally, in this embodiment of this application, the second preset input parameter may be any one of the following: a click input, a long-press input, a drag input, or the like.

Optionally, in this embodiment of this application, the user may respectively perform an input on the first area or the second area in the system status bar, to trigger the electronic device to perform a first operation.

It should be noted that in each area of the first area and the second area, different input parameters correspond to different operations. For example: a click input on the first area may trigger the electronic device to update and display a current page (or return to a previous page of the current page, return to the desktop, or the like); a long-press input on the first area may trigger the electronic device to return to the previous page of the current page (or update and display the current page, return to the desktop, or the like); and similarly, for a corresponding relationship between an input parameter and an operation in the second area, reference may be made to the related description of the first area.

In this embodiment of this application, the user may perform a third input on the blank area in which no identifier is displayed in the system status bar, so as to trigger the electronic device to perform a first operation corresponding to a preset input parameter according to a matching condition between the input parameter of the third input by the user and the preset input parameter. Therefore, the diversity of a user input may be improved, so that the flexibility of performing an operation by the electronic device may be improved.

It should be noted that in the function execution method provided in the embodiments of this application, an execution entity may be a function execution apparatus, or a control module configured to perform the function execution method in the function execution apparatus. In the embodiments of this application, the function execution apparatus performing the function execution method is used as an example to describe the function execution apparatus provided in the embodiments of this application.

FIG. 8 is a possible schematic structural diagram of a function execution apparatus according to an embodiment of this application. As shown in FIG. 8, a function execution apparatus 70 may include: a receiving module 71 and an execution module 72.

The receiving module 71 is configured to receive a first input by a user in a case that at least one first identifier is displayed in a system status bar on a screen, where the at least one first identifier includes at least one of the following: an identifier of an unread message, an identifier of prompt information, or an identifier of a system function, the prompt information is used for prompting the user of an application running in a background, and the first input is an input by the user on a target identifier in the at least one first identifier. The execution module 72 is configured to perform, in response to the first input received by the receiving module 71, in a case that an input parameter of the first input matches a first preset input parameter, a target operation corresponding to both the target identifier and the first preset input parameter.

In a possible implementation, the system status bar includes a first area and a second area, the first area is associated with a message notification page, and the message notification page is configured to display preview information of the unread message and preview information of the prompt information; and the second area is associated with a control page, the control page is configured to display at least one target control, and each target control is configured to enable or disable a function. The receiving module 71 is further configured to receive, after performing the target operation corresponding to both the target identifier and the first preset input parameter, a second input by a user on a target area, where the target area is the first area or the second area. As shown in FIG. 8 and FIG. 9, the function execution apparatus 70 provided in the embodiments of this application further includes: a display module 73. The display module 73 is configured to display, in response to the second input received by the receiving module 71, a page associated with the target area.

In a possible implementation, the at least one first identifier includes the identifier of the unread message and the identifier of the prompt information, and the target area is the first area; and the message notification page includes a preview message display area and a first compensation display area, the preview message display area is used for displaying the preview information of the unread message and the preview information of the prompt information, the first compensation display area is used for displaying at least one second identifier, and the at least one second identifier is an identifier of a message whose preview information is not displayed in the preview message display area.

In a possible implementation, the at least one first identifier includes the identifier of the unread message, the identifier of the prompt information, and the identifier of the system function, and the target area is the second area; and the control page includes a control display area and a second compensation display area, the control display area is used for displaying the at least one target control, and the second compensation display area is used for displaying the identifier of the unread message and the identifier of the prompt information.

In a possible implementation, the receiving module 71 is further configured to receive, after performing the target operation corresponding to both the target identifier and the first preset input parameter, a third input by the user, where the third input is an input by the user on a blank area in the system status bar, and the blank area is an area in which no identifier is displayed in the system status bar. The execution module 72 is further configured to perform, in response to the third input received by the receiving module 71, in a case that an input parameter of the third input matches a second preset input parameter, a first operation corresponding to the second preset input parameter. The first operation is any one of the following: refreshing a target page, displaying a previous page of the target page, displaying a background task management page, or displaying a desktop; and different second preset input parameters correspond to different operations, and the target page is a page currently displayed by an electronic device.

In a possible implementation, the receiving module 71 is further configured to receive, before receiving the first input by the user in a case that at least one first identifier is displayed in the system status bar on the screen, a first message. As shown in FIG. 9, the function execution apparatus provided in the embodiments of this application further includes: a display module 73. The display module 73 is configured to display a third identifier in the system status bar, where the third identifier is used for indicating that an electronic device receives the first message, and the third identifier is an identifier in the at least one first identifier; or the display module 73 is configured to display a fourth identifier in the system status bar in a case of running a first application in the background, where the fourth identifier is used for prompting the first application running in the background, and the fourth identifier is an identifier in the at least one first identifier.

The function execution apparatus provided in the embodiments of this application may implement the processes implemented by the function execution apparatus in the method embodiment. To avoid repetition, details are not repeated.

The embodiments of this application provide a function execution apparatus. Because in a case that there are a plurality of identifiers displayed in the system status bar on the screen of the electronic device, the user may directly input a specific identifier displayed in the system status bar, so as to trigger the electronic device to determine whether the input parameter inputted by the user for the specific identifier matches the preset input parameter, and determine a to-be-performed operation. There is no need for the user to perform a pull-down input on the system status bar to display the notification management page, and then input a notification message corresponding to the specific identifier. Therefore, an operation of the user may be simplified and a time may be reduced, and the efficiency of displaying the message on the electronic device may be improved.

The function execution apparatus in the embodiments of this application may be an apparatus, and may also be a component in a terminal, an integrated circuit, or a chip. The apparatus may be a mobile electronic device, or may be a non-mobile electronic device. For example, the mobile electronic device may be a mobile phone, a tablet computer, a notebook computer, a handheld computer, a vehicle-mounted electronic device, a wearable device, an ultra-mobile personal computer (ultra-mobile personal computer, UMPC), a netbook, a personal digital assistant (personal digital assistant, PDA), or the like. The non-mobile terminal may be a server, a network attached storage (network attached storage, NAS), a personal computer (personal computer, PC), a television (television, TV), a cash machine, a self-service machine, or the like, which is not specifically limited in the embodiments of this application.

The function execution apparatus in the embodiments of this application may be an apparatus having an operating system. The operating system may be an Android (Android) operating system, may be an iOS operating system, and may further be another possible operating system, which is not specifically limited in this embodiment of this application.

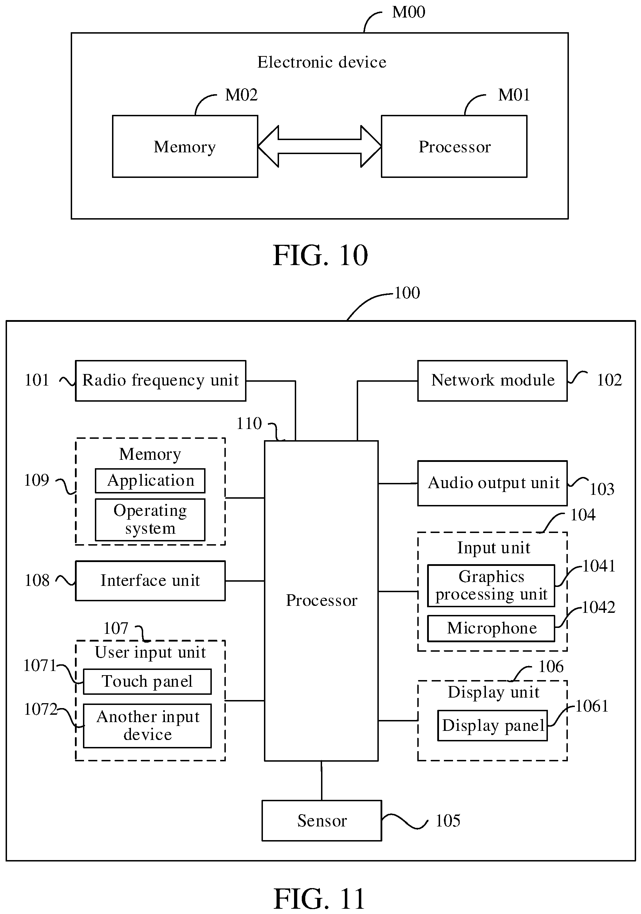

Optionally, as shown in FIG. 10, the embodiments of this application further provide an electronic device M00, including a processor M01, a memory M02, and a program or an instruction stored in the memory M02 and executable on the processor M01, the program or the instruction, when executed by the processor M01, implements the various processes of the function execution method embodiment, and may implement the same technical effect. To avoid repetition, details are not repeated.

It should be noted that the electronic device in the embodiments of this application include the mobile electronic device and the non-mobile electronic device.

FIG. 11 is a schematic diagram of a hardware structure of an electronic device according to an embodiment of this application.

The electronic device 100 includes, but is not limited to, components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the electronic device 100 may further include the power supply (such as a battery) for supplying power to the components. The power supply may be logically connected to the processor 110 by a power management system, thereby implementing functions such as charging, discharging, and power consumption management by using the power management system. An electronic structure shown in FIG. 11 does not constitute a limitation to the electronic device, and the electronic device may include more or fewer components than those shown in the figure, or some components may be combined, or a different component deployment may be used, and details are not repeated.

The user input unit 107 is configured to receive a first input by a user in a case that at least one first identifier is displayed in a system status bar on a screen, where the at least one first identifier includes at least one of the following: an identifier of an unread message, an identifier of prompt information, or an identifier of a system function, the prompt information is used for prompting the user of an application running in a background, and the first input is an input by the user on a target identifier in the at least one first identifier.

The processor 110 is configured to perform, in response to the first input, in a case that an input parameter of the first input matches a first preset input parameter, a target operation corresponding to both the target identifier and the first preset input parameter.

The embodiments of this application provide an electronic device. Because in a case that there are a plurality of identifiers displayed in the system status bar on the screen of the electronic device, the user may directly input a specific identifier displayed in the system status bar, so as to trigger the electronic device to determine whether the input parameter inputted by the user for the specific identifier matches the preset input parameter, and determine a to-be-performed operation. There is no need for the user to perform a pull-down input on the system status bar to display the notification management page, and then input a notification message corresponding to the specific identifier. Therefore, an operation of the user may be simplified and a time may be reduced, and the efficiency of displaying the message on the electronic device may be improved.

Optionally, the user input unit 107 is further configured to receive a second input by a user on a target area, where the target area is the first area or the second area.

The display unit 106 is configured to display, in response to the second input, a page associated with the target area.

In this embodiment of this application, a system status bar of the electronic device may include a first area and a second area, and the first area may be associated with a message notification page, to display preview information of an unread message and preview information of prompt information; the second area may be associated with a control page, to display at least one target control; and the user may perform a second input on the first area or the second area, to trigger the electronic device to display a message notification page or a control page. Therefore, the user may flexibly perform a selection input on a plurality of areas in the system status bar, so that the electronic device displays a corresponding page, thereby improving the flexibility of displaying a page by the electronic device.

The user input unit 107 is further configured to receive a third input by the user, where the third input is an input by the user on a blank area in the system status bar, and the blank area is an area in which no identifier is displayed in the system status bar.

The processor 110 is further configured to perform, in response to the third input, in a case that an input parameter of the third input matches a second preset input parameter, a first operation corresponding to the second preset input parameter.

In this embodiment of this application, the user may perform a third input on the blank area in the system status bar that does not display an identifier, so as to trigger the electronic device to perform a first operation corresponding to a preset input parameter according to a matching condition between the third input parameter input by the user and the preset input parameter. Therefore, the diversity of a user input may be improved, so that the flexibility of the electronic device to perform an operation may be improved.

The input unit 104 is configured to receive a first message.

The display unit 106 is further configured to display a third identifier in the system status bar, where the third identifier is used for indicating that an electronic device receives the first message, and the third identifier is an identifier in the at least one first identifier.

The display unit 106 is further configured to display a fourth identifier in the system status bar in a case of running a first application in the background, where the fourth identifier is used for prompting the first application running in the background, and the fourth identifier is an identifier in the at least one first identifier.

In this embodiment of this application, when the electronic device receives the first message, the electronic device may display a third identifier used for indicating the first message in the system status bar to prompt the user; or when the electronic device runs the first application in the background, the electronic device may display a fourth identifier used for indicating the first application in the system status bar, so that when the electronic device receives a new message or the application running in the background, the electronic device may display the corresponding identifier in the system status bar in time, which improves the flexibility of displaying the identifier by the electronic device.

It should be understood that, in this embodiment of this application, the input unit 104 may include a graphics processing unit (Graphics Processing Unit, GPU) 1041 and a microphone 1042. The graphics processing unit 1041 performs processing on image data of a static picture or a video that is obtained by an image acquisition apparatus (for example, a camera) in a video acquisition mode or an image acquisition mode. The display unit 106 may include a display panel 1061, and the display panel 1061 may be configured by using a liquid crystal display, an organic light-emitting diode, or the like. The user input unit 107 includes a touch panel 1071 and another input device 1072. The touch panel 1071 is also referred to as a touchscreen. The touch panel 1071 may include two parts: a touch detection apparatus and a touch controller. The another input device 1072 may include, but not limited to, a physical keyboard, a functional key (such as a volume control key or a switch key), a track ball, a mouse, and a joystick, which are not described herein in detail. The memory 109 may be configured to store a software program and various data, including but not limited to an application and an operating system. The processor 110 may integrate an application processor and a modem processor. The application processor mainly processes an operating system, a user interface, an application, and the like. The modem processor mainly processes wireless communication. It may be understood that the foregoing modem may either not be integrated into the processor 110.

The embodiments of this application further provide a readable storage medium storing therein a program or an instruction. The program or the instruction, when executed by a processor, implements various processes of the function execution method embodiment, and the same technical effects may be achieved, which will not be repeated in detail herein to avoid repetition.

The processor is a processor in the electronic device described in the foregoing embodiment. The readable storage medium includes a computer-readable storage medium, for example, a Read-Only Memory (Read-Only Memory, ROM), a Random Access Memory (Random Access Memory, RAM), a magnetic disk, an optical disc or the like.

The embodiments of this application further provide a chip, including a processor and a communication interface, where the communication interface is coupled to the processor. The processor is configured to run a program or an instruction to implement various processes of the function execution method embodiment, and may implement the same technical effects, which will not be repeated in detail herein to avoid repetition.

It should be understood that the chip mentioned in the embodiments of this application may further be referred to as a system-level chip, a system chip, a chip system, a system on chip, or the like.

It should be noted that the term "include", "comprise" or any other variation thereof in this specification intends to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

Although the embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A function execution method, comprising:
receiving a first input by a user in a case that at least one first identifier is displayed in a system status bar on a screen, wherein the at least one first identifier comprises at least one of the following: an identifier of an unread message, an identifier of prompt information, or an identifier of a system function, the prompt information is used for prompting the user of an application running in a background, and the first input is an input by the user on a target identifier in the at least one first identifier; and
in response to the first input, in a case that an input parameter of the first input matches a first preset input parameter, performing a target operation corresponding to both the target identifier and the first preset input parameter.

2. The method according to claim 1, wherein the system status bar comprises a first area and a second area, the first area is associated with a message notification page, and the message notification page is configured to display preview information of the unread message and preview information of the prompt information; the second area is associated with a control page, the control page is configured to display at least one target control, and each target control is configured to enable or disable a function; and
after the performing a target operation corresponding to both the target identifier and the first preset input parameter, the method further comprises:
receiving a second input by the user on a target area, wherein the target area is the first area or the second area; and
displaying, in response to the second input, a page associated with the target area.

3. The method according to claim 2, wherein the at least one first identifier comprises the identifier of the unread message and the identifier of the prompt information, and the target area is the first area; and the message notification page comprises a preview message display area and a first compensation display area, the preview message display area is used for displaying the preview information of the unread message and the preview information of the prompt information, the first compensation display area is used for displaying at least one second identifier, and the at least one second identifier is an identifier of a message whose preview information is not displayed in the preview message display area.

4. The method according to claim 2, wherein the at least one first identifier comprises the identifier of the unread message, the identifier of the prompt information, and the identifier of the system function, and the target area is the second area; and the control page comprises a control display area and a second compensation display area, the control display area is used for displaying the at least one target control, and the second compensation display area is used for displaying the identifier of the unread message and the identifier of the prompt information.

5. The method according to any one of claims 1 to 4, wherein after the performing a target operation corresponding to both the target identifier and the first preset input parameter, the method further comprises:
receiving a third input by the user, wherein the third input is an input by the user on a blank area in the system status bar, and the blank area is an area in which no identifier is displayed in the system status bar; and
in response to the third input, in a case that an input parameter of the third input matches a second preset input parameter, performing a first operation corresponding to the second preset input parameter, wherein
the first operation is any one of the following: refreshing a target page, displaying a previous page of the target page, displaying a background task management page, or displaying a desktop; and different second preset input parameters correspond to different operations, and the target page is a page currently displayed by an electronic device.

6. The method according to claim 1, wherein before the receiving a first input by a user in a case that at least one first identifier is displayed in a system status bar on a screen, the method further comprises:
receiving a first message, and displaying a third identifier in the system status bar, wherein the third identifier is used for indicating that an electronic device receives the first message, and the third identifier is an identifier in the at least one first identifier;
or
displaying a fourth identifier in the system status bar in a case of running a first application in the background, wherein the fourth identifier is used for prompting the first application running in the background, and the fourth identifier is an identifier in the at least one first identifier.

7. A function execution apparatus, comprising: a receiving module and an execution module, wherein
the receiving module is configured to receive a first input by a user in a case that at least one first identifier is displayed in a system status bar on a screen, wherein the at least one first identifier comprises at least one of the following: an identifier of an unread message, an identifier of prompt information, or an identifier of a system function, the prompt information is used for prompting the user of an application running in a background, and the first input is an input by the user on a target identifier in the at least one first identifier; and
the execution module is configured to perform, in response to the first input received by the receiving module, in a case that an input parameter of the first input matches a first preset input parameter, a target operation corresponding to both the target identifier and the first preset input parameter.

8. The function execution apparatus according to claim 7, wherein the system status bar comprises a first area and a second area, the first area is associated with a message notification page, and the message notification page is configured to display preview information of the unread message and preview information of the prompt information; the second area is associated with a control page, the control page is configured to display at least one target control, and each target control is configured to enable or disable a function; and
the receiving module is further configured to receive, after the performing a target operation corresponding to both the target identifier and the first preset input parameter, a second input by the user on a target area, wherein the target area is the first area or the second area; and
the function execution apparatus further comprises a display module, wherein
the display module is configured to display, in response to the second input received by the receiving module, a page associated with the target area.

9. The function execution apparatus according to claim 8, wherein the at least one first identifier comprises the identifier of the unread message and the identifier of the prompt information, and the target area is the first area; and the message notification page comprises a preview message display area and a first compensation display area, the preview message display area is used for displaying the preview information of the unread message and the preview information of the prompt information, the first compensation display area is used for displaying at least one second identifier, and the at least one second identifier is an identifier of a message whose preview information is not displayed in the preview message display area.

10. The function execution apparatus according to claim 8, wherein the at least one first identifier comprises the identifier of the unread message, the identifier of the prompt information, and the identifier of the system function, and the target area is the second area; and the control page comprises a control display area and a second compensation display area, the control display area is used for displaying the at least one target control, and the second compensation display area is used for displaying the identifier of the unread message and the identifier of the prompt information.

11. The function execution apparatus according to any one of claims 7 to 10, wherein the receiving module is further configured to receive, after the performing a target operation corresponding to both the target identifier and the first preset input parameter, a third input by the user, wherein the third input is an input by the user on a blank area in the system status bar, and the blank area is an area in which no identifier is displayed in the system status bar; and
the execution module is further configured to perform, in response to the third input received by the receiving module, in a case that an input parameter of the third input matches a second preset input parameter, a first operation corresponding to the second preset input parameter, wherein
the first operation is any one of the following: refreshing a target page, displaying a previous page of the target page, displaying a background task management page, or displaying a desktop; and different second preset input parameters correspond to different operations, and the target page is a page currently displayed by an electronic device.

12. The function execution apparatus according to claim 7, wherein the receiving module is further configured to receive, before the receiving a first input by a user in a case that at least one first identifier is displayed in a system status bar on a screen, a first message; and
the function execution apparatus further comprises a display module, wherein
the display module is configured to display a third identifier in the system status bar, wherein the third identifier is used for indicating that an electronic device receives the first message, and the third identifier is an identifier in the at least one first identifier;
or
the display module is configured to display a fourth identifier in the system status bar in a case of running a first application in the background, wherein the fourth identifier is used for prompting the first application running in the background, and the fourth identifier is an identifier in the at least one first identifier.

13. An electronic device, comprising a processor, a memory, and a program or an instruction stored in the memory and executable on the processor, wherein the program or the instruction, when executed by the processor, implements steps of the function execution method according to any one of claims 1 to 6.

14. A readable storage medium, storing a program or an instruction, wherein the program or the instruction, when executed by a processor, implements steps of the function execution method according to any one of claims 1 to 6.

15. A chip, comprising a processor and a communication interface, wherein the communication interface is coupled to the processor, and the processor is configured to run a program or an instruction to implement steps of the function execution method according to any one of claims 1 to 6.
